# EUROPEAN PATENT APPLICATION

(11) **EP 1 096 758 A2**
(43) Date of publication of application: **02.05.2001**
(21) Application number: 00123181.0
(22) Date of filing: 25.10.2000
(51) Int. Cl.: H04M 1/02

(54) **Portable communication terminal**

(30) Priority: 26.10.1999 JP 30459299
(71) Applicant: Matsushita Electric Industrial Co., Ltd., Kadoma-shi, Osaka (JP)
(72) Inventor: Kitamura, Toshiyasu, Yokohama-shi, Kanagawa (JP); Nanmoku, Teruo, Naka-gun, Kanagawa (JP); Ohira, Akinori, Yokohama-shi, Kanagawa (JP)
(74) Representative: Grünecker, Kinkeldey, Stockmair & Schwanhäusser Anwaltssozietät

(57) **Abstract**

There is provided a portable terminal unit including a box constituting a unit body. The box comprises a first case and a second case. The first case includes an outer wall, a first rib provided at a predetermine distance from the outer wall and in parallel to the outer wall, and a groove portion formed by the outer wall and the first rib. The second case includes a second rib capable of fitting in the groove portion of the first case. Owing to the above constitution, an inlay rib and a reverse inlay rib are adjacent to each other even if a unit body is miniaturized or thinned, and rigidity of the unit body is improved.

## Description

### Background of the Invention

### 1. Field of the Invention

The present invention relates to a portable terminal unit, which can make a relation in which an inlay rib and a reverse inlay rib are adjacent to each other particularly even if a unit body is miniaturized or thinned, and which is so constructed that rigidity of the unit body is improved.

### 2. Description of the Related Art

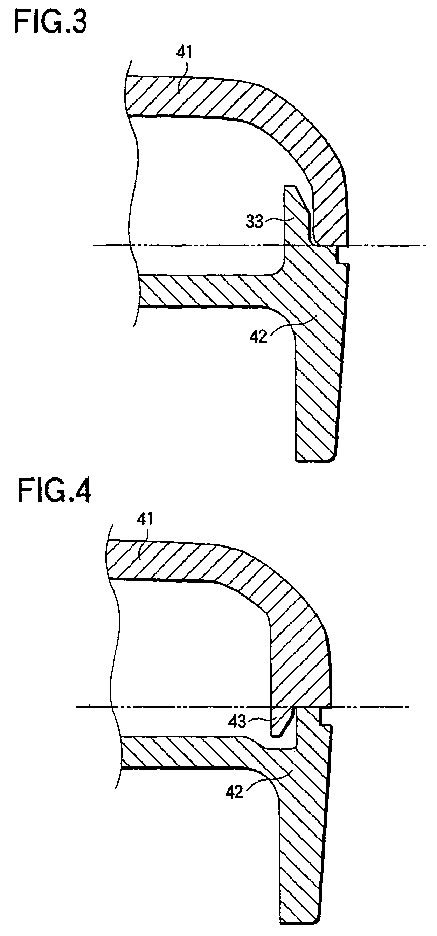

As a rib making an inlay relation of a box constituting the unit body, an inlay rib, for example, as shown in Fig. 3, in which a rib provided for a lower case enters into the inside of an upper case; and a reverse inlay rib, as shown in Fig. 4, in which a rib provided for the upper case enters into the lower case have been conventionally known.

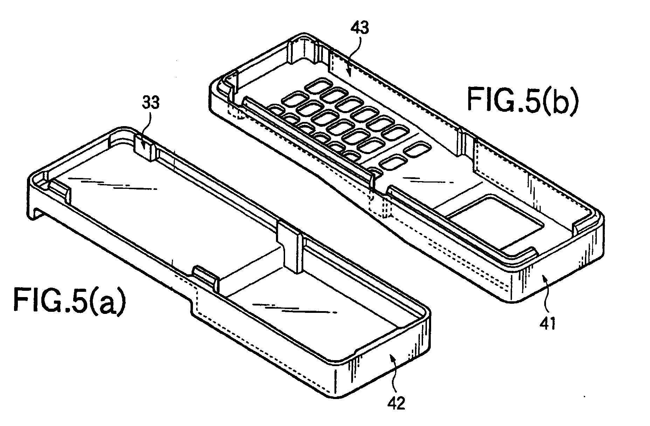

Fig. 5 shows the box constitution of the unit body in which these ribs are incorporated. Fig. 5 (a) shows a lower case, in which an inlay rib is provided; and Fig. 5(b) is an upper case, in which a reverse inlay rib is provided.

A rib 33 and a rib 43 enter mutually into an opposite case in an inlay manner, and the inlay and the reverse inlay continue in a state where they are alternately adjacent to each other. Though either the inlay rib or the reverse inlay rib restricts transformation by external force in one direction, it permits transformation by external force in the opposite direction. Therefore, in case the inlay rib and the reverse inlay rib are adjacent to each other as describedabove, the upper case and the lower case restrict mutually the transformation, so that there is an effect that the transformation by the external force in one direction and also the transformation by the external force in the opposite direction are difficult to be produced.

However, as the unit body is being miniaturized and thinned, a space for arranging the above conventional inlay rib and reverse inlay rib in a row comes to be gradually reduced, so that the above suitable relation cannot be made.

Further, the portable terminal unit such as a portable cellular phone, PHS (Personal Handyphone System), and the like is being miniaturized and lightened year after year. Recently, a slim type is becoming a large point for determining merchandise power. However, there is a problem that in case that we intend to make a design of the slim type while we are reducing the weight of the unit body, the rigidity of the unit lowers and the unit becomes weak in the strength.

### Summary of the Invention

An object of the invention is to provide a portable terminal unit, which can make a relation in which an inlay rib and a reverse inlay rib are adjacent to each other even if a unit body is miniaturized or thinned, and which improves rigidity of the unit body.

According to a first aspect of the invention, in a portable terminal unit, a box constituting a unit body has a first rib provided at a predetermine distance from an outer wall and in parallel to the outer wall, and comprises a first case in which a groove portion is formed by the first rib and the outer wall and a second case having a second rib that can fit in the groove portion of the first case.

By this constitution, a relation of an inlay rib and a reverse inlay rib can be made even if a unit body is miniaturized or thinned, and also rigidity of the unit body can be improved.

Further, according to a second aspect of the invention, a portable terminal unit having a box constitution divided into a first case and a second case is characterized in that a first reinforcement rib protruding to the second case is provided for the first case, that a second reinforcement rib protruding to the first case is provided for the second case, that a recess portion is provided between the first reinforcement rib provided for the first case and a body portion of the first case, and that the second reinforcement rib provided for the second case is put in the recess portion up to the middle.

By this constitution, the relation of the inlay rib and the reverse inlay rib can be made even if the unit body is miniaturized or thinned, and also the rigidity of the unit body can be improved.

Further, according to a third aspect of the invention, the portable terminal unit according to the second aspect is characterized in that a portion of the first reinforcement rib provided for the first case, which comes into contact with the second reinforcement rib provided for the second case, is tapered. By this constitution, fitting of the upper case and the lower case can be facilitated.

Further, according to a fourth aspect of the invention, the portable terminal unit according to the second aspect is characterized in that a portion of the second reinforcement rib provided for the second case, which comes into contact with the first reinforcement rib provided for the first case, is tapered. By this constitution, fitting of the upper case and the lower case can be facilitated.

Further, according to a fifth aspect of the invention, the portable terminal unit according to the second aspect is characterized in that a portion of the first case, which firstly comes into contact with the second case when the second and first cases are fitted in each other, is tapered, and that a head portion of the second reinforcement rib provided for the second case, which first comes into contact with the first case, is also tapered. By this constitution, fitting of the upper case and the lower case can be facilitated.

According to a sixth aspect of the invention, a box unit formed by fitting a pair of cases is characterized that a first rib that is installed, at a predetermined distance from an outer wall and in parallel to the outer wall is provided for one case, that a second rib that is fitted in a groove formed by the outer wall of the one case and the first rib is provided for the other case, and that the pair of cases are fitted in each other by fitting the second rib of the other case in the groove formed by the outer wall of the one case and the first rib, thereby to form a box.

By this constitution, the relation of the inlay rib and the reverse inlay rib can be made even if the unit body is miniaturized or thinned, and also rigidity of the unit body can be improved.

### Brief Description of the Drawings

Fig. 1 is a sectional view showing a box constitution of a portable terminal unit according to a mode for carrying out the invention.
Fig. 2 (a) is a diagram showing a constitution of a lower case according to the mode for carrying out the invention.
Fig. 2(b) is a diagram showing a constitution of an upper case according to the mode for carrying out the invention.
Fig. 3 is a sectional view showing a box constitution of a conventional portable terminal unit having an inlay rib.
Fig. 4 is a sectional view showing a box constitution of a conventional portable terminal unit having a reverse inlay rib.
Fig. 5(a) is a diagram showing a constitution of a conventional lower case.
Fig. 5(b) is a diagram showing a constitution of a conventional upper case.

### Detailed Description of the Preferred Embodiments

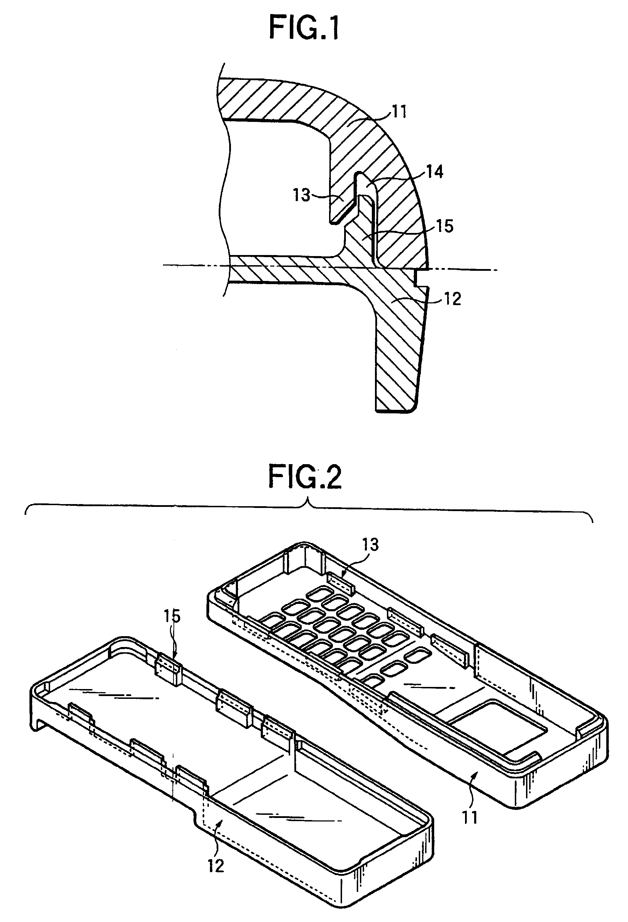

A mode for carrying out the invention will be described below with reference to Figs. 1 and 2.

Fig. 1 is a sectional view showing a box constitution of a portable terminal unit according to the mode for carrying out the invention, in which an upper case and a lower case that are separated from each other are fitted, whereby a box is completed.

Referring further to Fig. 1, the box constituting the unit body is divided into an upper case 11 and a lower case 12; a first rib 13 that is installed at a predetermined distance from an outer wall and in parallel to the outer wall is provided for the upper case 11; and a groove portion 14 is formed by this first rib 13 and the outer wall.

Further, a second rib 15 that can fit in the above groove 14 of the upper case 11 is provided for the lower case 12.

This point will be expressed below from the different viewpoint. A first reinforcement rib 13 protruding to the lower case 12 is provided for the upper case 11, and a second reinforcement rib 15 protruding to the upper case 11 is provided for the lower case 12. Further, a recess portion 14 is provided between the first reinforcement rib 13 provided for the upper case 11 and a body portion of the upper case 11, and the second reinforcement rib 15 provided for the lower case 12 is put in the recess portion 14 up to the middle thereby to fit the upper case and the lower case in each other.

Fig. 2(a) shows a constitution of the lower case 12. In the lower case 12, there is provided the second rib 15. Further, Fig. 2(b) shows a constitution of the upper case 11, in which the first rib 13 is provided.

As described above, in the invention, the box constituting the unit body has the first rib installed at a predetermine distance from the outer wall and in parallel to the outer wall, and comprises the upper case in which the groove portion is formed by this first rib and the outer wall and the lower case having the second rib that can fit in the groove portion of this upper case. It is possible not only to simultaneously make the inlay and reverse inlay relations of the upper case and the lower case but also to improve the rigidity of the upper case by providing the first rib for the upper case.

In this mode for carrying out the invention, by way of example, the upper case is taken as the first case and the lower case is taken as the second case. However, the lower case may be taken as the first case and the upper case may be taken as the second case, needless to say.

As described above, according to the first aspect of the invention, in the portable terminal unit, the box constituting the unit body has the first rib provided at a predetermine distance from the outer wall and in parallel to the outer wall, and comprises the first case in which the groove portion is formed by the first rib and the outer wall and the second case having the second rib that can fit in the groove portion of the first case. Hereby, there are effects that relations of the inlay rib and the reverse inlay rib can be made even if the unit body is miniaturized or thinned, and also that the rigidity of the unit body can be improved.
Further, according to the second aspect of the invention, the portable terminal unit having the box constitution divided into the first case and the second case is characterized in that the first reinforcement rib protruding to the second case is provided for the first case, that the second reinforcement rib protruding to the first case is provided for the second case, that the recess portion is provided between the first reinforcement rib provided for the first case and the body portion of the first case, and that the second reinforcement rib provided for the second case is put in the recess portion up to the middle. Hereby, there are effects that the relations of the inlay rib and the reverse inlay rib can be made even if the unit body is miniaturized or thinned, and also that the rigidity of the unit body can be improved.

Further, according to the third aspect of the invention, the portable terminal unit according to the second aspect is characterized in that the portion of the first reinforcement rib provided for the first case, which comes into contact with the second reinforcement rib provided for the second case, is tapered. By this constitution, there is an effect that fitting of the upper case and the lower case can be facilitated.

Further, according to the fourth aspect of the invention, the portable terminal unit according to the second aspect is characterized in that the portion of the second reinforcement rib provided for the second case, which comes into contact with the first reinforcement rib provided for the first case, is tapered. By this constitution, there is an effect that fitting of the upper case and the lower case can be facilitated.

Further, according to the fifth aspect of the invention, the portable terminal unit according to the second aspect is characterized in that the portion of the first case, which firstly comes into contact with the second case when the second and first cases are fitted in each other, is tapered, and that the head portion of the second reinforcement rib provided for the second case, which first comes into contact with the first case, is also tapered. Hereby, there is an effect that fitting of the upper case and the lower case can be facilitated. Further, according to the sixth aspect of the invention, the box unit formed by fitting a pair of cases is characterized that the first rib that is installed at a predetermined distance from the outer wall and in parallel to the outer wall is provided for one case, that the second rib that is fitted in the groove formed by the outer wall of the one case and the first rib is provided for the other case, and that the pair of cases are fitted in each other by fitting the second rib of the other case in the groove formed by the outer wall of the one case and the first rib, thereby to form a box. Owing to this constitution, there are effects that the relations of the inlay rib and the reverse inlay rib can be made even if the unit body is miniaturized or thinned, and also that the rigidity of the unit body can be improved.

## Claims

1. A portable terminal unit including a box constituting a unit body, said box comprising:
a first case including an outer wall, a first rib provided at a predetermine distance from the outer wall of said first case and in parallel to the outer wall of said first case, and a groove portion formed by the outer wall of said first case and the first rib; and
a second case including a second rib capable of fitting in the groove portion of said first case.

2. A portable terminal unit comprising:
a box constitution divided into a first case and a second case,
said box constitution including:
a body portion of the first case
a first reinforcement rib provided on the first case and protruding to the second case;
a second reinforcement rib provided on the second case and protruding to the first case; and
a recess portion provided between said first reinforcement rib and said body portion of the first case,
wherein said second reinforcement rib is inserted into said recess portion up to the middle.

3. The portable terminal unit according to Claim 2, wherein a portion of said first reinforcement rib is tapered where the portion comes into contact with said second reinforcement rib.

4. The portable terminal unit according to Claim 2, wherein a portion of said second reinforcement rib is tapered where the portion comes into contact with said first reinforcement rib.

5. The portable terminal unit according to Claim 2,
wherein a portion of the first case is tapered where the portion firstly comes into contact with the second case when the second and first cases are fitted in each other, and
wherein a head portion of said second reinforcement rib is tapered where the head portion first comes into contact with the first case.

6. A box unit formed by fitting a first case and a second case,
wherein a first rib that is provided on said first case and at a predetermined distance from an outer wall and in parallel,
a second rib that is provided on said second case and is fitted in a groove formed by the first rib and the outer wall of said first case, and
said first and second cases are fitted in each other by fitting the second rib of said second case in the groove formed by the first rib and the outer wall of said first case, thereby to form a box.
